# FASCICULE DE BREVET EUROPEEN

(11) **EP 0 953 505 B1**
(45) Date de publication et mention de la délivrance du brevet: **08.01.2003**
(21) Numéro de dépôt: 99400927.2
(22) Date de dépôt: 16.04.1999
(51) Int. Cl.: B64C 13/50, B64C 13/42

(54) **Système de commande mixte pour surface aérodynamique d'aéronef**
Doppelmodus-Steuersystem für eine aerodynamische Fläche eines Flugzeugs
Dual-mode aircraft aerodynamic surface control system

(30) Priorité: 29.04.1998 FR 9805399
(43) Date de publication de la demande: 03.11.1999
(73) Titulaire: AEROSPATIALE MATRA, 75016 Paris (FR)
(72) Inventeur: Durandeau, Michel, 31200 Toulouse (FR); Foch, Etienne, 31000 Toulouse (FR)
(74) Mandataire: Bonnetat, Christian

(56) Documents cités:
- DE-A- 3 220 782
- FR-A- 2 603 865
- FR-A- 2 686 310
- SUNDBERG G R: "CIVIL AIR TRANSPORT: A FRESH LOOK AT POWER-BY-WIRE AND FLY-BY -LIGHT" PROCEEDINGS OF THE NATIONAL AEROSPACE AND ELECTRONICS CONFERENCE (NAECON), DAYTON, MAY 21 - 25, 1990, vol. 3, 21 mai 1990 (1990-05-21), pages 1365-1368, XP000314504 INSTITUTE OF ELECTRICAL AND ELECTRONICS ENGINEERS
- CARY R. SPITZER: "A New Direction in Energy Conversion : The All-Electric Aircraft" PROCEEDINGS OF THE 20TH INTERSOCIETY ENERGY CONVERSION ENGINEERING CONFERENCE, vol. 1, août 1995 (1995-08), pages 1388-1393, XP002089503 Warrendale, USA

## Description

La présente invention concerne un système pour la commande d'une surface aérodynamique d'un aéronef, telle que gouverne, volet, aileron, etc ...

On sait que, notamment sur les avions commerciaux, le système de commande d'une telle surface aérodynamique comporte, pour des raisons de redondance, deux servocommandes hydrauliques en parallèle. Ainsi, l'une desdites servocommandes peut être active, c'est-à-dire utilisée pour actionner ladite surface aérodynamique, pendant que l'autre est passive et utilisée pour amortir les vibrations divergentes qui sont dues aux effets aérodynamiques (flutter) et auxquelles est soumise ladite surface aérodynamique. A ce dernier effet, lesdites servocommandes incorporent un système amortisseur (clapets d'isolement, réservoir de fluide, dashpot entre les chambres des servocommandes, etc ...). Par ailleurs, lorsque la servocommande active tombe en panne, la servocommande passive est activée pour se substituer à cette dernière. On obtient ainsi la continuité de la commande de ladite surface aérodynamique.

Cependant, un tel système de commande connu pour surface aérodynamique présente des inconvénients, dont le principal est que la probabilité de perte simultanée des deux servocommandes est de l'ordre de 10 ⁻⁷/h, c'est-à-dire qu'une telle perte n'est pas improbable. On est donc amené à prévoir à bord de l'aéronef une source de fluide hydraulique supplémentaire pour pressuriser en secours au moins l'une des deux servocommandes. Une telle source de fluide hydraulique supplémentaire augmente donc la masse et le coût dudit aéronef, tout en soulevant des difficultés d'implantation et de tests de fonctionnement à bord dudit aéronef.

Par ailleurs, les systèmes amortisseurs des servocommandes augmentent également le coût et la masse de celles-ci et nécessitent des procédures de test de fonctionnement longues et difficiles.

La présente invention a pour objet de remédier à ces inconvénients.

A cette fin, selon l'invention, le système pour la commande d'une surface aérodynamique d'un aéronef comportant un organe d'actionnement volontaire à la disposition d'un pilote et une servocommande hydraulique contrôlée par ledit organe d'actionnement volontaire est remarquable en ce qu'il comporte de plus :
- une machine électrique pouvant fonctionner soit en moteur, soit en génératrice, dont la sortie est reliée mécaniquement à ladite surface aérodynamique ;
- une alimentation électrique, susceptible d'alimenter ladite machine électrique sous la dépendance dudit organe d'actionnement volontaire ;
- une charge résistive dans laquelle est susceptible de débiter ladite machine électrique ;
- un dispositif de commutation destiné à relier électriquement ladite machine électrique soit à ladite alimentation électrique, soit à ladite charge résistive ;
- un dispositif de contrôle de l'alimentation de ladite servocommande en fluide hydraulique ; et
- un dispositif logique recevant des informations sur les états de fonctionnement de ladite alimentation électrique et de ladite servocommande hydraulique et contrôlant les états dudit dispositif de commutation et dudit dispositif de contrôle d'alimentation hydraulique.

On voit que, grâce à la présente invention, il est possible de supprimer l'une des servocommandes hydrauliques du système connu décrit ci-dessus, ce qui en abaisse donc les coûts et la masse et supprime les tests d'efficacité d'amortissement associés à ladite servocommande hydraulique supprimée. Celle-ci est remplacée par le vérin électrique que forme ladite machine électrique et la liaison mécanique la reliant à ladite surface aérodynamique. Une telle liaison mécanique peut comporter une vis solidaire en rotation de l'arbre de ladite machine électrique et engagée dans un écrou empêché de tourner.

On conçoit aisément que, lorsque ladite machine électrique fonctionne en moteur, elle peut actionner ladite surface aérodynamique par l'intermédiaire de ladite liaison mécanique. En revanche, lorsque ladite surface aérodynamique est actionnée par la servocommande hydraulique, ladite liaison mécanique transmet à ladite machine électrique les mouvements de ladite surface aérodynamique, de sorte que ladite machine électrique peut fonctionner en génératrice et débiter du courant dans ladite charge résistive. Elle amortit donc alors les vibrations aérodynamiques de ladite surface.

On remarquera que, lorsque ladite machine électrique fonctionne en génératrice, on peut mesurer le courant qu'elle débite dans la charge résistive et associer la valeur mesurée dudit courant à la vitesse de déplacement de la gouverne (sur les aéronefs commerciaux, il y a au moins un capteur de position sur la surface aérodynamique), de sorte qu'il est possible de vérifier l'existence de l'amortissement et même de mesurer ses performances. Une telle surveillance, qui est simple, peut être permanente.

Ainsi, le vérin électrique formé par ladite machine électrique, associée à ladite liaison mécanique, peut exercer soit la fonction commande, soit la fonction amortissement de ladite surface aérodynamique. Pour qu'il en soit de même de la servocommande hydraulique, il suffit que celle-ci comporte, de façon connue, un système amortisseur, tel que ceux décrits ci-dessus.

Selon un premier mode de réalisation du système de commande conforme à la présente invention, celui-ci est remarquable :
- en ce que, en fonctionnement normal, ladite servocommande hydraulique est prioritaire pour commander ladite surface aérodynamique, l'amortissement des vibrations aérodynamiques étant assuré par ladite machine électrique, fonctionnant en génératrice débitant dans ladite charge résistive ; et
- en ce que, en fonctionnement de secours lorsque la servocommande hydraulique est en panne, ladite machine électrique fonctionne en moteur pour commander ladite surface aérodynamique, l'amortissement desdites vibrations aérodynamiques de ladite surface étant assuré par ladite servocommande hydraulique.

Dans ce cas, ledit dispositif logique peut comporter :
- une première entrée recevant l'information sur l'état de fonctionnement de ladite alimentation électrique ;
- une seconde entrée recevant l'information sur l'état de fonctionnement de ladite servocommande hydraulique ;
- une première sortie contrôlant l'état dudit dispositif de commutation ;
- une seconde sortie contrôlant l'état dudit dispositif de contrôle d'alimentation hydraulique ;
- une porte logique de type ET, à deux entrées, dont l'une est reliée directement à ladite première entrée et dont l'autre est reliée à ladite seconde entrée par l'intermédiaire d'un inverseur, la sortie de ladite porte logique étant reliée à ladite première sortie ; et
- une liaison directe entre ladite seconde entrée et ladite seconde sortie.

En revanche, dans une variante de réalisation, le système de commande conforme à la présente invention est remarquable :
- en ce que, en fonctionnement normal, ladite machine électrique fonctionnant en moteur est prioritaire pour commander ladite surface aérodynamique, l'amortissement des vibrations aérodynamiques de celle-ci étant assuré par ladite servocommande hydraulique ; et
- en ce que, en fonctionnement de secours lorsque ladite machine électrique ne peut fonctionner en moteur, la commande de ladite surface aérodynamique est assurée par ladite servocommande hydraulique, l'amortissement des vibrations aérodynamiques de ladite surface aérodynamique étant obtenu par ladite machine électrique fonctionnant en génératrice débitant dans ladite charge résistive.

Dans cette variante de réalisation, le dispositif logique peut alors comporter :
- une première entrée recevant l'information sur l'état de fonctionnement de ladite alimentation électrique ;
- une seconde entrée recevant l'information sur l'état de fonctionnement de ladite servocommande hydraulique ;
- une première sortie contrôlant l'état dudit dispositif de commutation ;
- une seconde sortie contrôlant l'état dudit dispositif de contrôle d'alimentation hydraulique ;
- une porte logique, de type ET, à deux entrées, dont l'une est reliée directement à ladite seconde entrée et dont l'autre est reliée à ladite première entrée par l'intermédiaire d'un inverseur, la sortie de ladite porte logique étant reliée à ladite seconde sortie ; et
- une liaison directe entre ladite première entrée et ladite première sortie.

Dans un troisième mode de réalisation, le système de commande conforme à la présente invention est remarquable :
- en ce qu'il comporte :
   . une servocommande hydraulique supplémentaire contrôlée par ledit organe d'actionnement volontaire et susceptible de commander ladite surface aérodynamique ;
   . un dispositif supplémentaire de contrôle de l'alimentation de ladite servocommande hydraulique supplémentaire en fluide hydraulique ; et
- en ce que, en fonctionnement normal, ladite servocommande hydraulique et ladite servocommande hydraulique supplémentaire sont prioritaires pour commander ladite surface aérodynamique, l'amortissement de celle-ci étant assuré par ladite machine électrique fonctionnant en génératrice.

Lesdites servocommandes hydrauliques forment donc alors un système ayant la structure du système connu à deux servocommandes hydrauliques, rappelé ci-dessus, à laquelle on a ajouté le vérin électrique formé par ladite machine et sa liaison à la surface aérodynamique. Cependant, dans ce cas, on peut éliminer des deux servocommandes hydrauliques les systèmes amortisseurs, puisque l'amortissement de la surface aérodynamique est réalisé par ledit vérin électrique.

Le dispositif logique de ce troisième mode de réalisation peut comporter :
- une première entrée recevant l'information sur l'état de fonctionnement de ladite alimentation électrique ;
- une deuxième entrée recevant l'information sur l'état de fonctionnement de ladite servocommande hydraulique ;
- une troisième entrée recevant l'information sur l'état de fonctionnement de ladite servocommande hydraulique supplémentaire ;
- une première sortie contrôlant l'état dudit dispositif de commutation ;
- une deuxième sortie contrôlant l'état dudit dispositif de contrôle de l'alimentation hydraulique de ladite servocommande ;
- une troisième sortie contrôlant l'état dudit dispositif supplémentaire de contrôle de l'alimentation hydraulique de ladite servocommande supplémentaire ;
- une première porte logique, de type ET à trois entrées, dont la première est reliée directement à ladite première entrée, dont la deuxième est reliée à ladite seconde entrée par l'intermédiaire d'un premier inverseur et dont la troisième est reliée à ladite troisième entrée par l'intermédiaire d'un second inverseur, la sortie de ladite première porte logique étant reliée à ladite première sortie ;
- une seconde porte logique, de type ET à deux entrées, dont l'une est reliée directement à ladite deuxième entrée et dont l'autre est reliée à ladite troisième entrée par l'intermédiaire dudit second inverseur, la sortie de ladite seconde porte logique étant reliée à ladite deuxième sortie ; et
- une liaison directe entre ladite troisième entrée et ladite troisième sortie.

Les figures du dessin annexé feront bien comprendre comment l'invention peut être réalisée. Sur ces figures, des références identiques désignent des éléments semblables.

La figure 1 montre le schéma synoptique d'un premier mode de réalisation du système conforme à l'invention pour la commande d'une surface aérodynamique d'un aéronef.

Les figures 2 et 3 illustrent schématiquement deux variantes du dispositif logique pour le système de la figure 1.

La figure 4 est le schéma synoptique d'un second mode de réalisation du système conforme à la présente invention.

La figure 5 est le schéma synoptique d'un dispositif logique pour le système de la figure 4.

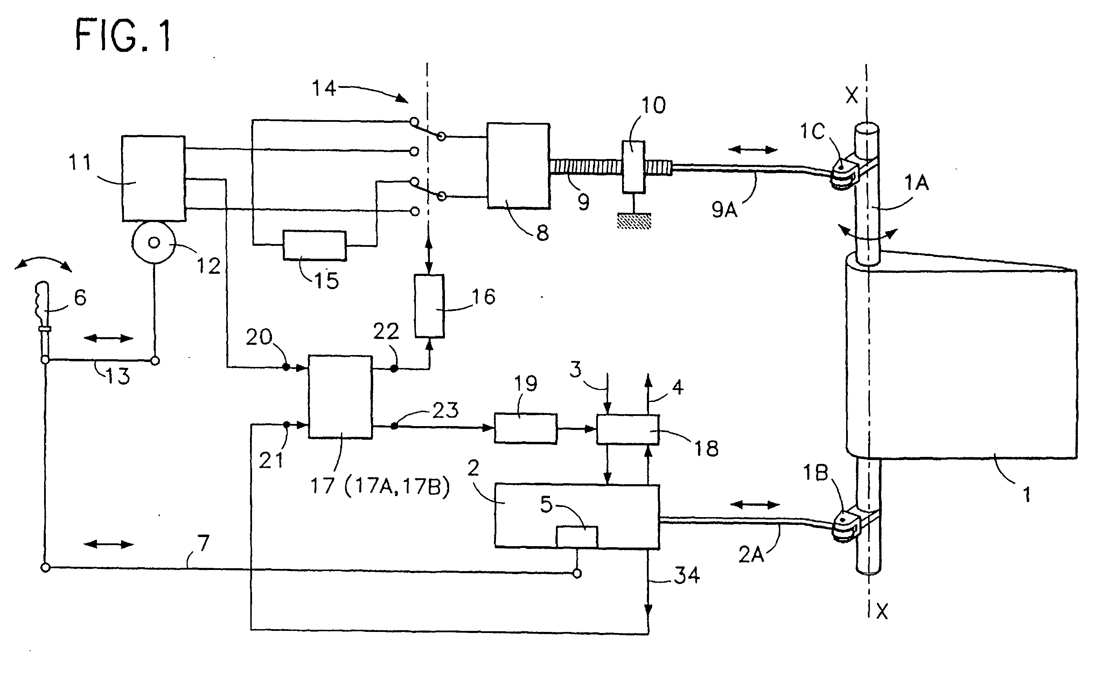

Le système de commande, conforme à la présente invention et représenté schématiquement sur la figure 1, est destiné à commander une surface aérodynamique 1 d'un aéronef (non représenté), cette surface aérodynamique étant par exemple un volet, un aileron, une gouverne de profondeur ou une gouverne de direction dudit aéronef. La surface aérodynamique 1 est susceptible de pivoter autour de l'axe X-X de son arbre 1A, sous l'action d'un vérin hydraulique 2 alimenté en fluide hydraulique par des conduites 3 et 4, respectivement de pression et de retour, et contrôlé par une commande 5. A cet effet, l'extrémité de la tige 2A du vérin hydraulique 2 est articulée sur un guignol 1B solidaire dudit arbre lA.

Ledit système de commande comporte un organe mobile d'actionnement volontaire 6, tel qu'un manche pivotant, à la disposition du pilote, et actionnant la commande 5 du vérin 2, par exemple par l'intermédiaire d'une timonerie mécanique 7.

Le système de commande de la figure 1 comporte de plus une machine électrique 8, par exemple à rotor à aimant permanent, susceptible de fonctionner en moteur pour un sens de rotation et en génératrice pour le sens de rotation opposé. L'arbre de la machine 8 est solidaire en rotation d'une vis 9, par exemple du type à billes, engagée dans un écrou 10, empêché de tourner. L'extrémité libre 9A de la vis 9 est articulée sur un autre guignol 1C solidaire de l'arbre 1A de la surface aérodynamique 1.

La machine électrique 8 peut être commandée en moteur, c'est-à-dire alimentée en énergie électrique, par un dispositif d'alimentation 11, contrôlé par un capteur de position 12 relié audit organe mobile d'actionnement volontaire 6, par exemple par l'intermédiaire d'une timonerie mécanique 13.

Entre ladite machine 8 et ledit dispositif d'alimentation 11 est disposé un dispositif de commutation double 14, susceptible de relier ladite machine 8 soit audit dispositif d'alimentation 11, soit à une charge résistive 15. Le dispositif de commutation 14 est commandé par un relais 16, lui-même contrôlé par un dispositif logique 17 relié au dispositif d'alimentation 11, duquel il reçoit une information d'état.

Par ailleurs, entre les conduites d'alimentation hydraulique 3 et 4 d'une part, et le vérin 2 d'autre part, est disposé un dispositif de commande d'alimentation 18, contrôlé par une électrovanne 19. Celle-ci reçoit des instructions de commande du dispositif logique 17, tandis qu'une information sur la pression hydraulique dans le vérin 2 est fournie audit dispositif logique 17. Ainsi, ledit dispositif logique 17 comporte deux entrées 20 et 21, recevant respectivement des informations d'états du dispositif d'alimentation électrique 11 et du vérin hydraulique 2, et deux sorties 22 et 23, commandant respectivement le relais 16 et l'électrovanne 19.

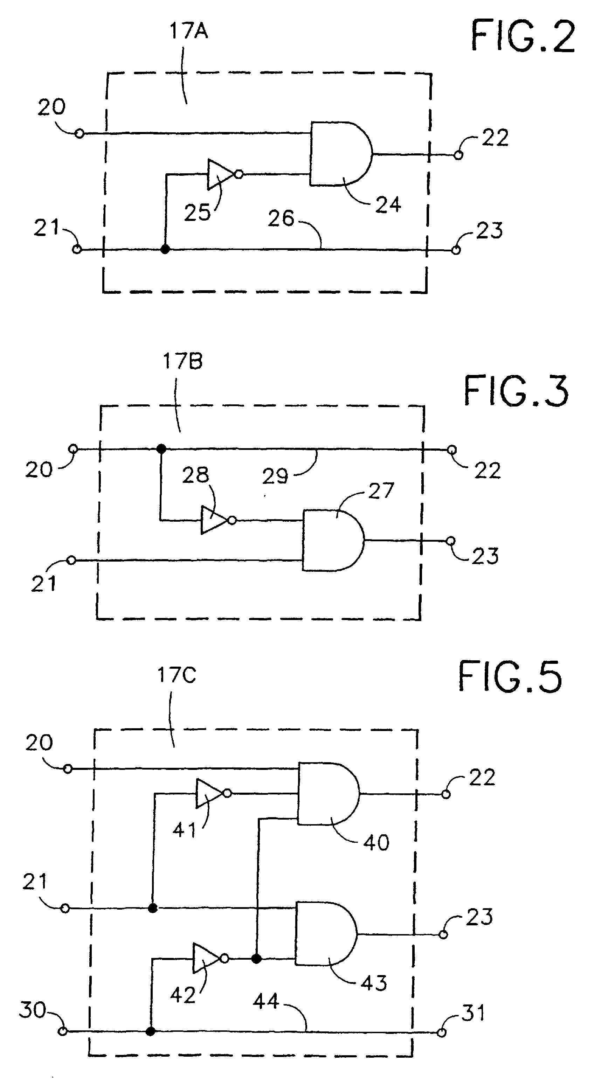

Sur la figure 2, on a représenté un premier mode de réalisation 17A pour le dispositif logique 17 de la figure 1. Le dispositif 17A comporte une porte logique 24, de type ET, à deux entrées. L'une des entrées de ladite porte 24 est reliée directement à l'entrée 20, tandis que l'autre entrée de ladite porte 24 est reliée à l'entrée 21 par l'intermédiaire d'un inverseur 25. La sortie de la porte 24 est reliée à la sortie 22 et une liaison directe 26 relie l'entrée 21 à la sortie 23.

Un tel dispositif logique 17A correspond au fait que la commande hydraulique 2, 5 est prioritaire et que la commande électrique 8 à 12 est prévue en secours, lorsque la commande hydraulique est en panne. Le fonctionnement du système de la figure 1 est alors le suivant.

Le commutateur 14 reliant la machine 8 à sa charge résistive 15, tant que la commande hydraulique 2, 5 est active, l'information correspondante de pression hydraulique est appliquée à l'entrée 21 du dispositif logique 17A et transmise à la sortie 23 de celui-ci, par la liaison 26. Par suite, l'électrovanne 19 contrôle le dispositif de commande d'alimentation 18 pour que le fluide hydraulique alimente le vérin 2, qui, à son tour, actionne la gouverne 1. Par ailleurs, l'inverseur 25 n'adresse aucun signal à la porte ET 24, de sorte que la sortie 22 ne peut commander le relais 16, qui maintient ainsi la position (représentée sur la figure 1) du commutateur 14 pour laquelle la machine 8 est isolée de son alimentation 11 et reliée à la charge résistive 15. Il en résulte donc que la machine 8 fonctionne en génératrice débitant dans la charge résistive 15. La machine 8 est donc en mesure d'amortir les vibrations (flutter) engendrées par les effets aérodynamiques sur la surface aérodynamique.

Ainsi, en fonctionnement normal, la surface aérodynamique 1 est actionnée par le vérin hydraulique 2 et amortie par le vérin électrique 8, 9, 10.

Si, maintenant, la commande hydraulique 2, 5 s'arrête de fonctionner, aucune information de pression n'est plus appliquée sur l'entrée 21, de sorte que la sortie 23 ne peut commander la servocommande 19. La commande hydraulique 2, 5 est donc isolée. Cependant, l'inverseur 25 adresse un signal à la porte ET 24, qui, par ailleurs, par l'intermédiaire de l'entrée 20 reçoit un signal indiquant que le dispositif d'alimentation électrique 11 est en état de fonctionnement. La sortie 22 et le relais 16 sont donc alimentés, de sorte que le commutateur 14 passe à sa position par laquelle la machine 8 est alimentée par le dispositif 11. La machine 8 fonctionne donc alors en moteur susceptible d'actionner la gouverne 1, sous la dépendance du manche 6, de la timonerie 13, du capteur de position 12 et du dispositif 11. De préférence, la commande hydraulique 2, 5 incorpore de façon connue un système amortisseur pour pouvoir amortir les vibrations (flutter) de la surface aérodynamique 1.

Ainsi, en cas de panne de la commande hydraulique 2, 5, la surface aérodynamique 1 est actionnée par le vérin électrique 8, 9, 10 et amortie par cette commande hydraulique 2, 5.

Le second mode de réalisation 17B pour le dispositif logique 17, représenté sur la figure 3, comporte une porte logique 27, de type ET, à deux entrées. L'une des entrées de ladite porte 27 est reliée directement à l'entrée 21, tandis que l'autre entrée de ladite porte 27 est reliée à l'entrée 20 par l'intermédiaire d'un inverseur 28. La sortie de la porte 27 est reliée à la sortie 23 et une liaison directe 29 relie l'entrée 20 à la sortie 22.

Par analogie avec ce qui a été décrit ci-dessus, on voit que le système de commande de la figure 1, avec le dispositif logique 17B de la figure 3, fonctionne de la façon suivante :
- en fonctionnement normal, le commutateur 14 relie la machine 8 à son alimentation 11 et la surface aérodynamique 1 est commandée par le vérin électrique 8, 9, 10 et amortie en vibrations aérodynamiques par la servocommande hydraulique 2, 5 ;
- si le vérin électrique 8, 9, 10 tombe en panne, le commutateur 14 bascule à sa position pour laquelle il relie la machine 8 à la charge résistive 15 et la surface aérodynamique est commandée par la servocommande hydraulique 2, 5 et amortie en vibrations aérodynamiques par le vérin électrique 8, 9, 10 dont la machine 8 fonctionne en génératrice débitant dans la charge résistive 15.

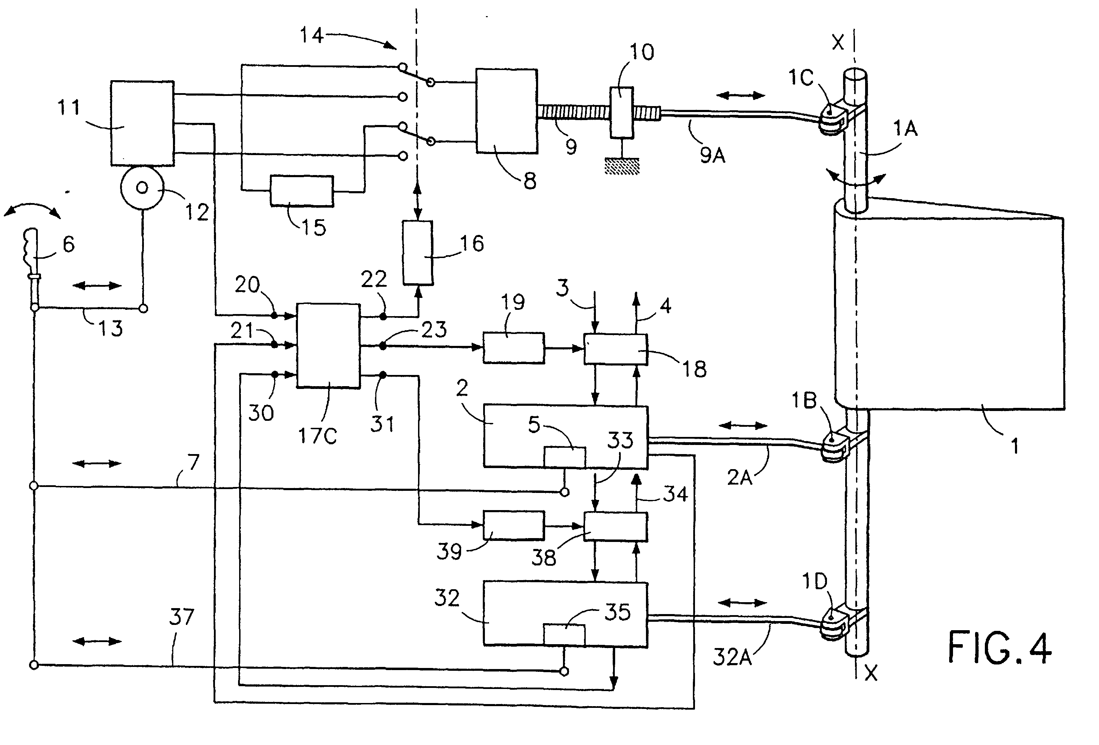

Dans le mode de réalisation du système conforme à la présente invention, représentée sur la figure 4, on retrouve les éléments 1, 1A, 1B, 1C, 2, 2A, 3 à 9, 9A, 10 à 23 décrits en regard de la figure 1, le dispositif logique 17 étant toutefois replacé par un dispositif logique 17C qui, en plus des entrées 20 et 21 et des sorties 22 et 23, comporte une entrée supplémentaire 30 et une sortie supplémentaire 31.

Le mode de réalisation de la figure 4 comporte de plus :
- un vérin hydraulique 32, monté en parallèle sur le vérin 2 et susceptible également de faire pivoter la surface aérodynamique 1 autour de son axe X-X. Le vérin 32 est alimenté en fluide hydraulique par des conduites 33 et 34, respectivement de pression et de retour, et contrôlé par une commande 35. Sa tige de vérin 32A est articulée sur un guignol 1D solidaire de l'arbre 1A ;
- une timonerie 37, par exemple mécanique, permettant d'actionner la commande 35 du vérin 32 par l'intermédiaire de l'organe mobile d'actionnement volontaire 6 ;
- un dispositif de commande d'alimentation 38 disposé entre les conduites d'alimentation hydraulique 33 et 34 d'une part, et le vérin 32 d'autre part, et délivrant des informations de pression hydraulique sur l'entrée supplémentaire 30 du dispositif logique 17C ; et
- une électrovanne 39 contrôlant le dispositif de commande d'alimentation 38 et recevant des instructions de commande du dispositif logique 17C.

Comme on peut le voir sur la figure 5, le dispositif logique 17C comporte :
- une première porte logique 40, de type ET à trois entrées, dont la sortie est reliée à la sortie 22. Une des entrées de la porte 40 est reliée directement à l'entrée 20, tandis que les deux autres entrées de ladite porte 40 sont respectivement reliées aux entrées 21 et 30, par l'intermédiaire d'inverseurs 41 ou 42, respectivement ;
- une seconde porte logique 43, de type ET à deux entrées, dont la sortie est reliée à la sortie 23. Une des entrées de la porte 43 est reliée directement à l'entrée 21, tandis que l'autre est reliée à l'entrée 30, par l'intermédiaire de l'inverseur 42 ; et
- une liaison directe 44 entre l'entrée 30 et la sortie 31.

On vérifie aisément, par analogie avec les explications ci-dessus, que le système de la figure 4, avec le dispositif 17C de la figure 5, fonctionne de la façon suivante :
- en fonctionnement normal, le commutateur 14 relie la machine 8 à la charge résistive 15 et la surface aérodynamique 1 est commandée par la servocommande hydraulique 32, 35 et amortie en vibrations aérodynamiques par le vérin électrique 8, 9, 10, dont la machine 8 fonctionne en génératrice ;
- dans le cas où la servocommande hydraulique 32, 35 tombe en panne, la surface aérodynamique 1 est commandée par la servocommande hydraulique 2, 5 et toujours amortie en vibrations aérodynamiques par le vérin électrique 8, 9, 10 comme ci dessus ;
- si les deux servocommandes 32, 35 et 2, 5 tombent en panne, la surface aérodynamique 1 est alors commandable par le vérin électrique 8, 9, 10 dont la machine 8 fonctionne alors en moteur.

Lorsque la machine 8 fonctionne en amortisseur, la mesure du courant qu'elle débite, liée à la vitesse de déplacement de la surface aérodynamique 1, permet de vérifier l'existence et les performances de l'amortissement. On élimine ainsi toute panne cachée de la fonction amortissement et il n'est plus nécessaire d'effectuer des tests périodiques de cette fonction. De ce fait, on peut supprimer, sur les commandes hydrauliques 2, 5 et 32, 35, les amortisseurs de vibrations de la surface 1. On remarquera qu'il est également possible, par cette mesure, de vérifier en permanence le bon état de la chaîne mécanique de secours.

Bien entendu, bien que ci-dessus on ait représenté des commandes de vol mécaniques, il va de soi que ces commandes de vol pourraient être totalement ou partiellement électriques.

## Revendications

1. Système pour la commande d'une surface aérodynamique (1) d'un aéronef comportant un organe d'actionnement volontaire (6) à la disposition d'un pilote et une servocommande hydraulique (2, 5) contrôlée par ledit organe d'actionnement volontaire (6),
**caractérisé en ce qu'**il comporte de plus :
- une machine électrique (8) pouvant fonctionner soit en moteur, soit en génératrice, dont la sortie est reliée mécaniquement à ladite surface aérodynamique (1) ;
- une alimentation électrique (11), susceptible d'alimenter ladite machine électrique (8) sous la dépendance dudit organe d'actionnement volontaire (6) ;
- une charge résistive (15) dans laquelle est susceptible de débiter ladite machine électrique (8) ;
- un dispositif de commutation (14, 16) destiné à relier électriquement ladite machine électrique (8) soit à ladite alimentation électrique (11), soit à ladite charge résistive (15) ;
- un dispositif (18, 19) de contrôle de l'alimentation de ladite servocommande (2, 5) en fluide hydraulique ; et
- un dispositif logique (17, 17A, 17B, 17C) recevant des informations sur les états de fonctionnement de ladite alimentation électrique (11) et de ladite servocommande hydraulique (2, 5) et contrôlant les états dudit dispositif de commutation (14, 16) et dudit dispositif (18, 19) de contrôle d'alimentation hydraulique.

2. Système selon la revendication 1,
**caractérisé en ce que** la liaison mécanique reliant ladite machine électrique (8) à ladite surface aérodynamique (1) comporte une vis (9) solidaire en rotation de l'arbre de ladite machine électrique et engagée dans un écrou (10) empêché de tourner.

3. Système selon l'une des revendications 1 ou 2,
**caractérisé en ce que** ladite servocommande hydraulique (2, 5) comporte un système amortisseur, susceptible d'amortir les vibrations de ladite servocommande hydraulique lorsqu'elle n'est pas active.

4. Système selon l'une des revendications 1 à 3,
**caractérisé :**
- **en ce que**, en fonctionnement normal, ladite servocommande hydraulique (2, 5) est prioritaire pour commander ladite surface aérodynamique (1), l'amortissement des vibrations aérodynamiques de celle-ci étant assuré par ladite machine électrique (8), fonctionnant en génératrice débitant dans ladite charge résistive (15) ; et
- **en ce que**, en fonctionnement de secours lorsque la servocommande hydraulique (2, 5) est en panne, ladite machine électrique (8) fonctionne en moteur pour commander ladite surface aérodynamique (1), l'amortissement desdites vibrations aérodynamiques de ladite surface (1) étant assuré par ladite servocommande hydraulique (2, 5).

5. Système selon l'une des revendications 1 à 3,
**caractérisé :**
- **en ce que**, en fonctionnement normal, ladite machine électrique (8) fonctionnant en moteur est prioritaire pour commander ladite surface aérodynamique (1), l'amortissement des vibrations aérodynamiques de celle-ci étant assuré par ladite servocommande hydraulique (2, 5) ; et
- **en ce que**, en fonctionnement de secours lorsque ladite machine électrique (8) ne peut fonctionner en moteur, la commande de ladite surface aérodynamique (1) est assurée par ladite servocommande hydraulique (2, 5), l'amortissement des vibrations aérodynamiques de ladite surface aérodynamique (1) étant obtenu par ladite machine électrique (8) fonctionnant en génératrice débitant dans ladite charge résistive (15).

6. Système selon la revendication 4,
**caractérisé en ce que** le dispositif logique (17A) comporte :
- une première entrée (20) recevant l'information sur l'état de fonctionnement de ladite alimentation électrique (11) ;
- une seconde entrée (21) recevant l'information sur l'état de fonctionnement de ladite servocommande hydraulique (2, 5) ;
- une première sortie (22) contrôlant l'état dudit dispositif de commutation (14, 16) ;
- une seconde sortie (23) contrôlant l'état dudit dispositif (18, 19) de contrôle d'alimentation hydraulique ;
- une porte logique (24), de type ET à deux entrées, dont l'une est reliée directement à ladite première entrée (20) et dont l'autre est reliée à ladite seconde entrée (21) par l'intermédiaire d'un inverseur (25), la sortie de ladite porte logique (24) étant reliée à ladite première sortie (22) ; et
- une liaison directe (26) entre ladite seconde entrée (21) et ladite seconde sortie (23).

7. Système selon la revendication 5,
**caractérisé en ce que** ledit dispositif logique (17B) comporte :
- une première entrée (20) recevant l'information sur l'état de fonctionnement de ladite alimentation électrique (11) ;
- une seconde entrée (21) recevant l'information sur l'état de fonctionnement de ladite servocommande hydraulique (2, 5) ;
- une première sortie (22) contrôlant l'état dudit dispositif de commutation (14, 16) ;
- une seconde sortie (23) contrôlant l'état dudit dispositif (18, 19) de contrôle d'alimentation hydraulique ;
- une porte logique (27), de type ET à deux entrées, dont l'une est reliée directement à ladite seconde entrée (21) et dont l'autre est reliée à ladite première entrée (20) par l'intermédiaire d'un inverseur (28), la sortie de ladite porte logique (27) étant reliée à ladite seconde sortie (23) ; et
- une liaison directe (29) entre ladite première entrée (20) et ladite première sortie (22).

8. Système selon l'une des revendications 1 ou 2,
**caractérisé :**
- **en ce qu'**il comporte :
. une servocommande hydraulique supplémentaire (32, 35) contrôlée par ledit organe d'actionnement volontaire (6) et susceptible de commander ladite surface aérodynamique (1) ;
. un dispositif supplémentaire (38, 39) de contrôle de l'alimentation de ladite servocommande hydraulique supplémentaire (32, 35) en fluide hydraulique ; et
- **en ce que**, en fonctionnement normal, ladite servocommande hydraulique (2, 5) et ladite servocommande hydraulique supplémentaire (32, 35) sont prioritaires pour commander ladite surface aérodynamique, l'amortissement de celle-ci étant assuré par ladite machine électrique fonctionnant en génératrice.

9. Système selon la revendication 8,
**caractérisé en ce que** ni ladite servocommande hydraulique (2, 5), ni ladite servocommande hydraulique supplémentaire (32, 35) ne sont pourvues d'un système amortisseur les rendant aptes à amortir les vibrations de ladite surface aérodynamique (1).

10. Système selon l'une des revendications 8 ou 9,
**caractérisé en ce que** ledit dispositif logique (17C) comporte :
- une première entrée (20) recevant l'information sur l'état de fonctionnement de ladite alimentation électrique (11) ;
- une deuxième entrée (21) recevant l'information sur l'état de fonctionnement de ladite servocommande hydraulique (2, 5) ;
- une troisième entrée (30) recevant l'information sur l'état de fonctionnement de ladite servocommande hydraulique supplémentaire (32, 35) ;
- une première sortie (22) contrôlant l'état dudit dispositif de commutation (14, 16) ;
- une deuxième sortie (23) contrôlant l'état dudit dispositif (18, 19) de contrôle de l'alimentation hydraulique de ladite servocommande (2, 5) ;
- une troisième sortie (31) contrôlant l'état dudit dispositif supplémentaire (38, 39) de contrôle de l'alimentation hydraulique de ladite servocommande supplémentaire (32, 35) ;
- une première porte logique (40), de type ET à trois entrées, dont la première est reliée directement à ladite première entrée (20), dont la deuxième est reliée à ladite seconde entrée (21) par l'intermédiaire d'un premier inverseur (41) et dont la troisième est reliée à ladite troisième entrée (30) par l'intermédiaire d'un second inverseur (42), la sortie de ladite première porte logique (40) étant reliée à ladite première sortie (22) ;
- une seconde porte logique (43), de type ET à deux entrées, dont l'une est reliée directement à ladite deuxième entrée (21) et dont l'autre est reliée à ladite troisième entrée (30) par l'intermédiaire dudit second inverseur (42), la sortie de ladite seconde porte logique (43) étant reliée à ladite deuxième sortie (23) ; et
- une liaison directe (44) entre ladite troisième entrée (30) et ladite troisième sortie (31).

## Patentansprüche

1. Steuersystem für eine aerodynamische Fläche (1) eines Flugzeugs, die ein Organ zur willkürlichen Betätigung (6) für den Piloten und eine hydraulische Servosteuerung (2, 5), die vom genannten Organ zur willkürlichen Betätigung (6) überwacht wird, umfasst,
**dadurch gekennzeichnet, dass** sie weiterhin folgendes umfasst:
- eine elektrische Maschine (8), die entweder als Motor oder als Generator arbeiten kann und deren Ausgang mechanisch mit der genannten aerodynamischen Fläche (1) verbunden ist;
- eine Stromversorgung (11), die die genannte elektrische Maschine (8) in Abhängigkeit von dem genannten Organ zur willkürlichen Steuerung (6) speisen kann;
- eine Wirklast, in die die genannte elektrische Maschine (8) Energie liefem kann;
- eine Umschaltvorrichtung (14, 15), die die genannte elektrische Maschine (8) elektrisch an die Stromversorgung (11) oder an die genannte Wirklast (15) anschließen soll;
- eine Vorrichtung (18, 19) zur Überwachung der Speisung der genannten Servosteuerung (2, 5) mit Hydraulikflüssigkeit, und
- eine Logikvorrichtung (17, 17A, 17B, 17C), die Informationen zu den Betriebszuständen der genannten Stromversorgung (11) und der genannten hydraulischen Servosteuerung (2,5 ) erhält und die Zustände der genannten Umschaltvorrichtung (14, 16) und der genannten Vorrichtung (18, 19) zur Überwachung der Hydraulikspeisung überwacht.

2. System gemäß Anspruch 1,
**dadurch gekennzeichnet, dass** die mechanische Verbindung, die die genannte elektrische Maschine (8) mit der genannten aerodynamischen Fläche (1) verbindet, eine Schraube (9) umfasst, die rotationsfest mit der Welle der genannten elektrischen Maschine ist und sich in einer Mutter (10) befindet, die sich nicht drehen kann.

3. System gemäß Anspruch 1 oder 2,
**dadurch gekennzeichnet, dass** die genannte hydraulische Servosteuerung (2, 5) ein Dämpfungssystem umfasst, das die Schwingungen der genannten hydraulischen Servosteuerung dämpfen kann, wenn diese nicht aktiv ist.

4. System gemäß einem der Ansprüche 1 bis 3,
**dadurch gekennzeichnet,**
- **dass** die genannte hydraulische Servosteuerung (2, 5) im Normalbetrieb für die Steuerung der genannten aerodynamischen Fläche (1) vorrangig ist, wobei die Dämpfung der aerodynamischen Schwingungen letzterer durch die genannte elektrische Maschine (8) gewährleistet wird, die als Generator funktioniert, der in die genannte Wirklast (15) Energie liefert, und
- **dass** die genannte elektrische Maschine (8) im Notbetrieb, wenn die hydraulische Servosteuerung (2, 5) ausgefallen ist, als Motor funktioniert, um die genannte aerodynamische Fläche (1) zu steuem, wobei die Dämpfung der genannten aerodynamischen Schwingungen der genannten Fläche (1) durch die genannte hydraulische Servosteuerung (2, 5) gewährleistet wird.

5. System gemäß einem der Ansprüche 1 bis 3,
**dadurch gekennzeichnet,**
- **dass** die genannte, als Motor funktionierende elektrische Maschine (8) im Normalbetrieb für die Steuerung der genannten aerodynamischen Fläche (1) vorrangig ist, wobei die Dämpfung der aerodynamischen Schwingungen letzterer durch die genannte hydraulische Servosteuerung (2, 5) gewährleistet wird, und
- dadurch, dass die Steuerung der genannten aerodynamischen Fläche (1) im Notbetrieb, wenn die genannte elektrische Maschine (8) nicht als Motor funktionieren kann, durch die genannte hydraulische Servosteuerung (2, 5) gewährleistet wird, wobei die Dämpfung der aerodynamischen Schwingungen der genannten aerodynamischen Fläche (1) durch die genannte elektrische Maschine (8) erzielt wird, die als in die genannte Wirklast (15) Energie liefemder Generator funktioniert.

6. System gemäß Anspruch 4,
**dadurch gekennzeichnet, dass** die Logikvorrichtung (17A) folgendes umfasst,
- einen ersten Eingang (20), der die Information zum Betriebszustand der genannten Stromversorgung (11) erhält;
- einen zweiten Eingang (21), der die Information zum Betriebszustand der genannten hydraulischen Servosteuerung (2, 5) erhält;
- einen ersten Ausgang (22), der den Zustand der genannten Umschaltvorrichtung (14, 16) überwacht;
- einen zweiten Ausgang (23), der den Zustand der genannten Vorrichtung (18, 19) zur Überwachung der Hydraulikspeisung überwacht;
- ein Logikglied (24) des Typs UND mit zwei Eingängen, von denen einer direkt mit dem genannten ersten Eingang (20) und der andere über einen Umschalter 25 mit dem genannten zweiten Eingang (21) verbunden ist, wobei der Ausgang des genannten Logikglieds (24) mit dem genannten ersten Ausgang (22) verbunden ist; und
- eine direkte Verbindung (26) zwischen dem genannten zweiten Eingang (21) und dem genannten zweiten Ausgang (23).

7. System gemäß Anspruch 5,
**dadurch gekennzeichnet, dass** die genannte Logikvorrichtung (17B) folgendes umfasst:
- einen ersten Eingang (20), der die Information zum Betriebszustand der genannten Stromversorgung (11) erhält;
- einen zweiten Eingang (21), der die Information zum Betriebszustand der genannten hydraulischen Servosteuerung (2, 5) erhält;
- einen ersten Ausgang (22), der den Zustand der genannten Umschaltvorrichtung (14, 16) überwacht;
- einen zweiten Ausgang (23), der den Zustand der genannten Vorrichtung (18, 19) zur Überwachung der Hydraulikspeisung überwacht;
- ein Logikglied (27) des Typs UND mit zwei Eingängen, von denen einer direkt mit dem genannten zweiten Eingang (21) und der andere über einen Umschatter (28) mit dem genannten ersten Eingang (20) verbunden ist, wobei der Ausgang des genannten Logikglieds (27) mit dem genannten zweiten Ausgang (23) verbunden ist; und
- eine direkte Verbindung (29) zwischen dem genannten ersten Eingang (20) und dem genannten ersten Ausgang (22).

8. System gemäß einem der Ansprüche 1 oder 2,
**dadurch gekennzeichnet,**
- **dass** es folgendes umfasst:
• eine zusätzliche hydraulische Servosteuerung (32, 35), die vom genannten Organ zur willkürlichen Betätigung (6) überwacht wird und die die genannte aerodynamische Fläche (1) steuern kann;
• eine zusätzliche Vorrichtung (38, 39) zur Überwachung der Speisung der genannten zusätzlichen (32,35) hydraulischen Servosteuerung mit Hydraulikflüssigkeit; und
- **dadurch, dass** die genannte hydraulische Servosteuerung (2, 5) und die genannte zusätzliche hydraulische Servosteuerung (32, 35) im Normalbetrieb für die Steuerung der genannten aerodynamischen Fläche vorrangig sind, wobei die Dämpfung letzterer durch die genannte elektrische Maschine, die als Generator funktioniert, gewährleistet wird.

9. System gemäß Anspruch 8,
**dadurch gekennzeichnet, dass** weder die genannte hydraulische Servosteuerung (2, 5), noch die genannte zusätzliche hydraulische Servosteuerung (32, 35) mit einem Dämpfungssystem versehen sind, das sie in die Lage versetzt, die Schwingungen der genannten aerodynamischen Fläche (1) zu dämpfen.

10. System gemäß einem der Ansprüche 8 oder 9,
**dadurch gekennzeichnet, dass** die genannte Logikvorrichtung (17C) folgendes umfasst:
- einen ersten Eingang (20), der die Information zum Betriebszustand der genannten Stromversorgung (11) erhält;
- einen zweiten Eingang (21), der die Information zum Betriebszustand der genannten hydraulischen Servosteuerung (2, 5) erhält;
- einen dritten Eingang (30), der die Information zum Betriebszustand der genannten zusätzlichen hydraulischen Servosteuerung (32, 35) erhält;
- einen ersten Ausgang (22), der den Zustand der genannten Umschaltvorrichtung (14, 16) überwacht;
- einen zweiten Ausgang (23), der den Zustand der genannten Vorrichtung (18, 19) zur Überwachung der Hydraulikspeisung der genannten Servosteuerung (2, 5) überwacht;
- einen dritten Ausgang (31), der den Zustand der genannten zusätzlichen Vorrichtung (38, 39) zur Überwachung der Hydraulikspeisung der genannten zusätzlichen Servosteuerung (2, 5) überwacht;
- ein erstes Logikglied (40) des Typs UND mit drei Eingängen, von denen der erste direkt mit dem genannten ersten Eingang (20), der zweite über einen ersten Umschalter (41) mit dem genannten zweiten Eingang (21) und der dritte über einen zweiten Umschalter (42) mit dem genannten dritten Eingang (30) verbunden ist, wobei der Ausgang des genannten ersten Logikglieds (40) mit dem genannten ersten Ausgang (22) verbunden ist;
- ein zweites Logikglied (43) des Typs UND mit zwei Eingängen, von denen einer direkt mit dem genannten zweiten Eingang (21) und der andere über den genannten zweiten Umschalter (42) mit dem genannten dritten Eingang (30) verbunden ist, wobei der Ausgang des genannten zweiten Logikglieds (43) mit dem genannten zweiten Ausgang (23) verbunden ist; und
- eine direkte Verbindung (44) zwischen dem genannten dritten Eingang (30) und dem genannten dritten Ausgang (31).

## Claims

1. A system for controlling an aerodynamic surface
(1) of an aircraft comprising a deliberate-actuation member (6) available to a pilot and a hydraulic servocontrol (2, 5) controlled by said deliberate-actuation member (6),
**characterized in that** it additionally comprises:
- an electric machine (8) which can operate either as a motor or as a generator, the output of which is connected mechanically to said aerodynamic surface (1) ;
- an electrical power supply (11), which can power said electric machine (8) under the dependency of said deliberate-actuation member (6);
- a resistive load (15) into which said electric machine (8) can output;
- a switching device (14, 16) intended to electrically connect said electric machine (8) either to said electrical power supply (11) or to said resistive load (15);
- a device (18, 19) for controlling the supply of hydraulic fluid to said servocontrol (2, 5); and
- a logic device (17, 17A, 17B, 17C) receiving information about the operating status of said electrical power supply (11) and of said hydraulic servocontrol (2, 5) and controlling the status of said switching device (14, 16) and of said device (18, 19) for controlling the hydraulic supply.

2. A system as claimed in claim 1,
**characterized in that** the mechanical connection connecting said electric machine (8) to said aerodynamic surface (1) comprises a screw (9) which rotates as one with the shaft of said electric machine and is engaged in a nut (10) that is prevented from turning.

3. A system as claimed in either of claims 1 and 2,
**characterized in that** said hydraulic servocontrol (2, 5) comprises a damping system capable of damping the vibrations of said hydraulic servocontrol when the latter is inactive.

4. A system as claimed in one of claims 1 to 3,
**characterized:**
- **in that** in normal operation, said hydraulic servocontrol (2, 5) takes priority for controlling said aerodynamic surface (1), the aerodynamic vibrations thereof being damped by said electric machine (8) operating as a generator outputting into said resistive load (15); and
- **in that** in back-up operation, when the hydraulic servocontrol (2, 5) has broken down, said electric machine (8) operates as a motor to control said aerodynamic surface (1), said aerodynamic vibrations of said surface (1) being damped by said hydraulic servocontrol (2, 5).

5. A system as claimed in one of claims 1 to 3,
**characterized:**
- **in that** in normal operation, said electric machine (8) operating as a motor takes priority for controlling said aerodynamic surface (1), the aerodynamic vibrations thereof being damped by said hydraulic servocontrol (2, 5); and
- **in that** in back-up operation, when said electric machine (8) cannot operate as a motor, control of said aerodynamic surface (1) is provided by said hydraulic servocontrol (2, 5), the aerodynamic vibrations of said aerodynamic surface (1) being damped by said electric machine (8) operating as a generator outputting into said resistive load (15) .

6. A system as claimed in claim 4,
**characterized in that** the logic device (17A) comprises:
- a first input (20) receiving information about the operating status of said electrical power supply (11);
- a second input (21) receiving information about the operating status of said hydraulic servocontrol (2, 5);
- a first output (22) controlling the status of said switching device (14, 16);
- a second output (23) controlling the status of said device (18, 19) for controlling the hydraulic supply;
- a logic gate (24) of the two-input AND type, of which one of the inputs is connected directly to said first input (20) and the other is connected to said second input (21) via an inverter (25), the output of said logic gate (24) being connected to said first output (22); and
- a direct connection (26) between said second input (21) and said second output (23).

7. A system as claimed in claim 5,
**characterized in that** said logic device (17B) comprises:
- a first input (20) receiving information about the operating status of said electrical power supply (11);
- a second input (21) receiving information about the operating status of said hydraulic servocontrol (2, 5);
- a first output (22) controlling the status of said switching device (14, 16);
- a second output (23) controlling the status of said device (18, 19) for controlling the hydraulic supply;
- a logic gate (27) of the two-input AND type, of which one of the inputs is connected directly to said second input (21) and the other is connected to said first input (20) via an inverter (28), the output of said logic gate (27) being connected to said second output (23); and
- a direct connection (29) between said first input (20) and said first output (22).

8. A system as claimed in either of claims 1 and 2,
- **characterized in that** it comprises:
. an additional hydraulic servocontrol (32, 35) controlled by said deliberate-actuation member (6) and capable of controlling said aerodynamic surface (1);
. an additional device (38, 39) for controlling the supply of hydraulic fluid to said additional hydraulic servocontrol (32, 35); and
- **in that**, in normal operation, said hydraulic servocontrol (2, 5) and said additional hydraulic servocontrol (32, 35) take priority in controlling said aerodynamic surface, this surface being damped by said electric machine operating as a generator.

9. A system as claimed in claim 8,
**characterized in that** neither said hydraulic servocontrol (2, 5) nor said additional hydraulic servocontrol (32, 35) are equipped with a damping system making them capable of damping the vibrations of said aerodynamic surface (1).

10. A system as claimed in one of claims 8 and 9,
**characterized in that** said logic device (17C) comprises:
- a first input (20) receiving information about the operating status of said electrical power supply (11);
- a second input (21) receiving information about the operating status of said hydraulic servocontrol (2, 5);
- a third input (30) receiving information about the operating status of said additional hydraulic servocontrol (32, 35);
- a first output (22) controlling the status of said switching device (14, 16);
- a second output (23) controlling the status of said device (18, 19) for controlling the hydraulic supply to said servocontrol (2, 5);
- a third output (31) controlling the status of said additional device (38, 39) for controlling the hydraulic supply to said additional servocontrol (32, 35);
- a first logic gate (40) of the three-input AND type, of which the first input is connected directly to said first input (20), the second is connected to said second input (21) via a first inverter (41) and the third is connected to said third input (30) via a second inverter (42), the output of said first logic gate (40) being connected to said first output (22);
- a second logic gate (43) of the two-input AND type, of which one of the inputs is connected directly to said second input (21) and the other is connected to said third input (30) via said second inverter (42), the output of said second logic gate (43) being connected to said second output (23); and
- a direct connection (44) between said third input (30) and said third output (31).
